# EUROPÄISCHE PATENTSCHRIFT

(11) **EP 2 332 238 B1**
(45) Veröffentlichungstag und Bekanntmachung des Hinweises auf die Patenterteilung: **30.05.2012**
(21) Anmeldenummer: 09781807.4
(22) Anmeldetag: 13.08.2009
(51) Int. Cl.: H02K 5/22, H02K 11/04, H01R 4/30

(54) **ELEKTRISCHE MASCHINE MIT EINER VERDREHSICHERUNG FÜR EIN STROMKABEL**
ELECTRIC MACHINE HAVING AN ANTI-TURN DEVICE FOR A POWER CABLE
MACHINE ÉLECTRIQUE POURVUE D'UNE PROTECTION ANTI-ROTATION POUR UN CÂBLE ÉLECTRIQUE

(30) Priorität: 29.09.2008 DE 102008042425
(43) Veröffentlichungstag der Anmeldung: 15.06.2011
(73) Patentinhaber: Robert Bosch GmbH, 70442 Stuttgart (DE)
(72) Erfinder: SEKERTZIS, Vassilios, 70439 Stuttgart (DE)
(86) Internationale Anmeldenummer: PCT/EP2009/060502
(87) Internationale Veröffentlichungsnummer: WO 2010/034567

(56) Entgegenhaltungen:
- WO-A-2004/109863
- DE-T2- 69 105 926
- US-A1- 2001 054 853

## Beschreibung

Die Erfindung betrifft eine elektrische Maschine, insbesondere Generator, für ein Kraftfahrzeug mit einem Kühlkörper und einem Stromanschlussbolzen, auf den eine Anschlussöse eines Stromkabels aufschiebbar ist, und mit einer Verdrehsicherung zur Verhinderung einer Verdrehung der Anschlussöse um die Längsachse des Stromanschlussbolzens.

### Stand der Technik

Es ist bekannt an elektrischen Maschinen Verdrehsicherungen einzusetzen.

Die US 6150741 beschreibt eine Verdrehsicherung, welche auf eine zylindrische Mutter aufgeschoben ist. Die Verdrehsicherung wird durch ein Außengehäuse der elektrischen Maschine verdrehsicher gehalten.

Die US 6563241 beschreibt eine Verdrehsicherung, welche auf eine zylinderförmig Mutter aufgeschoben ist. Aufgrund ihrer Formgestaltung ist die Verdrehsicherung drehfest durch ein Gehäuse gehalten. Ferner weist die Verdrehsicherung einen Haken auf, welcher die Verdrehsicherung zusätzlich in einer axialen Richtung sichert.

US 2001/0548 530 offenbart eine elektrische Maschine für ein Kraftfahrzeug, mit einem Kühlkörper und einem Stromanschlussbolzen , auf den eine Anschlussöse eines Stromkabeis aufschiebbar ist, und mit einer Verdrehsicherung zur Verhinderung einer Verdrehung der Anschlussöse um die Längsachse des Stromanschlussbolzens wobei die Verdrehsicherung (108) eine lösbare, um die Längsachse des Stromanschlusbolzens drehfeste Steckverbindung mit dem Deckel aufweist.

Zur Vereinfachung des Herstellungsprozesses wird eine Verdrehsicherung benötigt, die unabhängig von einem Gehäuse verdrehsicher im Bereich des Stromanschlussbolzens angeordnet ist.

### Offenbarung der Erfindung

Erfindungsgemäß ist vorgesehen, dass die Verdrehsicherung eine lösbare, um die Längsachse des Stromanschlussbolzens drehfeste Steckverbindung mit dem Kühlkörper aufweist. Damit ergibt sich auf einfache Weise die Möglichkeit, die Verdrehsicherung an der elektrischen Maschine unabhangig von einem Gehäuse verdrehsicher zu befestigen. Die Lösbarkeit der Steckverbindung ermöglicht sowohl einen einfachen Zusammenbau sowie einen einfachen Austausch der Verdrehsicherung bei Wartungsarbeiten. Es ist denkbar, die Steckverbindung derart auszulegen, dass eine Klemmung vorliegt, sodass die Verdrehsicherung auch bei mechanischer Einwirkung nicht unbeabsichtigt aus der Anordnung gelöst wird. Auf diese Weise wird ermöglicht, dass die Verdrehsicherung nach Anbringung während des Herstellungsprozesses an ihrem Einsatzort verbleibt, und nicht während Transporten und Einbauarbeiten abgelöst wird. Ferner ergibt sich der Vorteil, dass der Kühlkörper meist aus einem belastbaren, beispielsweise metallischen Material besteht, welcher unbeschadet hohe Drehkräfte aufnehmen kann. Die Verdrehsicherung ist vorteilhafterweise aus einem nicht leitenden Material, wie einem Kunststoff, insbesondere Spritzkunststoff, oder einem Verbundmaterial hergestellt.

Nach einer Weiterbildung der Erfindung ist vorgesehen, dass die Steckverbindung aus mindestens einer Stecköffnung und mindestens einem Steckzapfen besteht, die in einer, vorzugsweise in Richtung der Längsachse des Stromanschlussbolzens verlaufenden Steckrichtung ineinandersteckbar sind. Die Ausführung des Verlaufs der Steckrichtung in Richtung der Längsachse ermöglicht in vorteilhafter Weise eine Ausbildung einer axialen Sicherung der Verdrehsicherung durch die Anschlussöse bei deren Installation an dem Stromanschlussbolzen. Ferner kann vorgesehen sein, dass der Steckzapfen konisch ausgestaltet ist, sodass die Stecköffnung durch Aufstecken auf den Steckzapfen eine Klemmwirkung herbeiführen kann.

Nach einer Weiterbildung der Erfindung ist vorgesehen, dass der Kühlkörper den Steckzapfen und die Verdrehsicherung die Stecköffnung aufweist. Die Ausbildung des Steckzapfens an dem Kühlkörper ist insbesondere dann vorteilhaft, wenn der Kühlkörper aus einem festen, massiven Material besteht. Die Ausbildung einer Stecköffnung in der Verdrehsicherung ist besonders dann sinnvoll, wenn die Verdrehsicherung dünnwandig ausgeführt ist.

Nach einer Weiterbildung der Erfindung ist vorgesehen, dass die Stecköffnung als Vertiefung oder als Durchbruch ausgebildet ist. Eine Vertiefung kann beilspielsweise durch Aussparen in dickem Material der Verdrehsicherung herbeigeführt werden oder durch Ausformen in dünnwandigem Material wie beispielsweise durch Tiefziehen oder durch entsprechendes Vorsehen einer Vertiefung bei Spritz- und Gießherstellungsvorgängen. Die Vertiefung ermöglicht ein Aufstecken auf den Steckzapfen nur soweit, bis der Steckzapfen in der Stecköffnung an einem Boden der Vertiefung anliegt. Die Ausgestaltung der Stecköffnung als Durchbruch ermöglicht eine einfache Herstellung. Eine Begrenzung beim Aufstecken ist bei einem Durchbruch nicht automatisch gegeben. Die Begrenzung kann durch entsprechende Ausgestaltung des Steckzapfens, wie beispielsweise Querschnittsveränderungen in Stufenform, hergestellt werden.

Nach einer Weiterbildung der Erfindung ist vorgesehen, dass die Stecköffnung einen nicht kreisförmigen Querschnitt, insbesondere rechteckigen, vieleckigen und/oder halbkreisförmigen Querschnitt besitzt.

Nach einer vorteilhaften Weiterbildung der Erfindung ist vorgesehen, dass der Steckzapfen einen an die Querschnittskontur der Stecköffnung angepassten, nicht kreisförmigen, insbesondere rechteckigen, vieleckigen und/oder halbkreisförmigen Querschnitt besitzt. Die Ausgestaltung der Querschnitte als nicht kreisförmig stellen eine drehfeste Verbindung zwischen Stecköffnung und Steckzapfen durch einen Materialschluss her. Dabei ist zu beachten, dass der Steckzapfen an die Stecköffnung angepasst ist, derart, dass der Steckzapfen in der Stecköffnung einführbar ist und nicht verdreht werden kann. Insbesondere ist dies der Fall, wenn die Querschnittskontur der Stecköffnung dem Querschnitt des Steckzapfens gleicht.

Nach einer Weiterbildung der Erfindung ist vorgesehen, dass der Stromanschlussbolzen an dem Kühlkörper und/oder an dem Steckzapfen angeordnet ist. Bei dieser Art der Ausgestaltung ist es besonders einfach, die Verdrehsicherung im Bereich des Stromanschlussbolzens anzuordnen und die Verdrehung der Anschlussöse in der Nähe der Drehachse - die Längsachse - zu verhindern. Insbesondere ist vorgesehen, dass der Stromanschlussbolzen mittig im Steckzapfen angeordnet ist, derart, dass die Längsachse des Stromanschlussbolzens mit einer Längsachse des Steckzapfens zusammenfällt.

In diesem Falt besteht die Möglichkeit, eine Verdrehsicherung auf den Steckzapfen aufzustecken, die sich in Umtangsrichtung um den Stromanschiussbolzen erstreckt. Diese Anordnung führt in besonders einfache Weise dazu, dass die Verdrehsicherung bei Festlegen der Anschlussöse axial gesichert ist und dass die Anschlussöse in Umfangsrichtung um die Längsachse gesichert werden kann.

Nach einer Weiterbildung der Erfindung ist vorgesehen, dass die Verdrehsicherung an dem Kühlkörper mittels einer lösbaren Axialsicherung gehalten ist. Eine derartige Axialsicherung hat den Vorteil, dass bei dem Herstellungsprozess ein versehentliches Lösen der Verdrehsicherung von dem Kühlkörper verhindert wird.

Nach einer Weiterbildung der Erfindung ist vorgesehen, dass die Axialsicherung mindestens einen am Kühlkörper angeordneten, sich quer zur Längsachse erstreckenden Axialsicherungszapfen und mindestens einen an der Verdrehsicherung angeordneten, eine, vorzugsweise entgegen der Steckrichtung mit dem Axialsicherungszapfen zusammenwirkende Hintergriffsstufe aufweisenden Schnapphaken aufweist. Derartige Schnapphaken ermöglichen es, dass die Verdrehsicherung beim Einstecken der Steckverbindung automatisch einrastet. Somit ist eine einfache und wirkungsvolle Montage möglich. Ferner ist die Verwendung von Schnapphaken bei einer Ausgestaltung der Verdrehsicherung als Spritzgussteil von Vorteil, da sie dort auf sehr einfache und wirtschaftliche Weise hergestellt werden können. Insbesondere ist vorgesehen, zwei Schnapphaken pro Axialsicherungszapfen zu verwenden. Ein zufälliges Lösen der Axialsicherung wird damit ausgeschlossen. Ferner wirkt eine derartig ausgestaltete Axialsicherung gleichzeitig als zusätzliche Sicherung zur Verhinderung einer Verdrehung der Verdrehsicherung gegenüber dem Steckzapfen.

Nach einer Weiterbildung der Erfindung ist vorgesehen, dass die Verdrehsicherung mindestens eine, vorzugsweise mehrere zueinander winkelversetzte Aufnahmetaschen für die Anschlussöse aufweist. Die Aufnahmetasche ist derart ausgestallet, dass sie entweder eine Anschlussöse aufnimmt, welche nicht kreisförmig ausgestaltet ist und/oder das der Anschlussöse zugehörige Stromkabel in Umfangsrichtung um die Längsachse in seiner Bewegung begrenzt. Es ist insbesondere vorgesehen, dass die Aufnahmetaschen ausgehend vom Stromanschlussbolzen in rinnenförmiger Weise radial weg verlaufen. Eine Vielzahl Aufnahmetaschen ermöglicht eine nachträgliche Wahl der Position der Anschlussöse nach Verstellung der elektrischen Maschinen, beispielsweise bei Einbau der elektrischen Maschine an ihrem Einsatzort Ferner kann die gleiche Verdrehsicherung für unterschiedliche elektrische Maschinen mit unterschiedlichen Einbaulage für die Anschlussöse eingesetzt werden.

Nach einer Weiterbildung der Erfindung ist vorgesehen, dass die Anschlussöse einem Kabelschuh angehört.

Nach einer Weiterbildung der Erfindung ist vorgesehen, dass der Kabelschuh einen Kabelanschlussbereich aufweist, der innerhalb der Aufnahmetasche liegend die Verdrehung verhindert. Dabei ist es insbesondere von Vorteil, wenn der Kabelschuh innerhalb einer Aufnahmetasche angeordnet ist und von der Aufnahmetasche in Umfangsrichtung um die Längsachse abgestützt wird.

### Kurze Beschreibung der zeichnungen

Im Folgenden wird die erfindungsgemäße Vorrichtung anhand von Ausführungsbeispielen dargestellt, und zwar zeigt die
- Figur 1: einen Generator aus dem Stand der Technik,
- Figur 2: eine Verdrehsicherung an einem Generator in einer Vorderansicht,
- Figur 3: die Verdrehsicherung an dem Generator in einer perspektivischen Ansicht,
- Figur 4: die Verdrehsicherung an dem Generator in einer Draufsicht,
- Figur 5: die Verdrehsicherung und einen Kühlkörper in einer Vorderansicht,
- Figur 6: die Verdrehsicherung und den Kühlkörper in einer perspektivischen Ansicht,
- Figur 7: die Verdrehsicherung und den Kühlkörper in einer Draufsicht,
- Figur 8: eine Anschlussöse eines Stromkabels,
- Figur 9: die Verdrehsicherung in einer Ansicht von unten,
- Figur 10: die Verdrehsicherung am Kühlkörper in einer Schnittdarstellung,
- Figur 11: eine alternative Ausgestaltung der Verdrehsicherung in einer Rückansicht,
- Figur 12: die alternative Ausgestaltungsform der Verdrehsicherung in einer perspektivischen Ansicht,
- Figur 13: eine weitere alternative Ausgestaltungsform der Verdrehsicherung in einer Vorderansicht und
- Figur 14: die weitere, alternative Ausgestaltungsform der Verdrehsicherung in einer perspektivischen Ansicht.

### Ausführungsform(en) der Erfindung

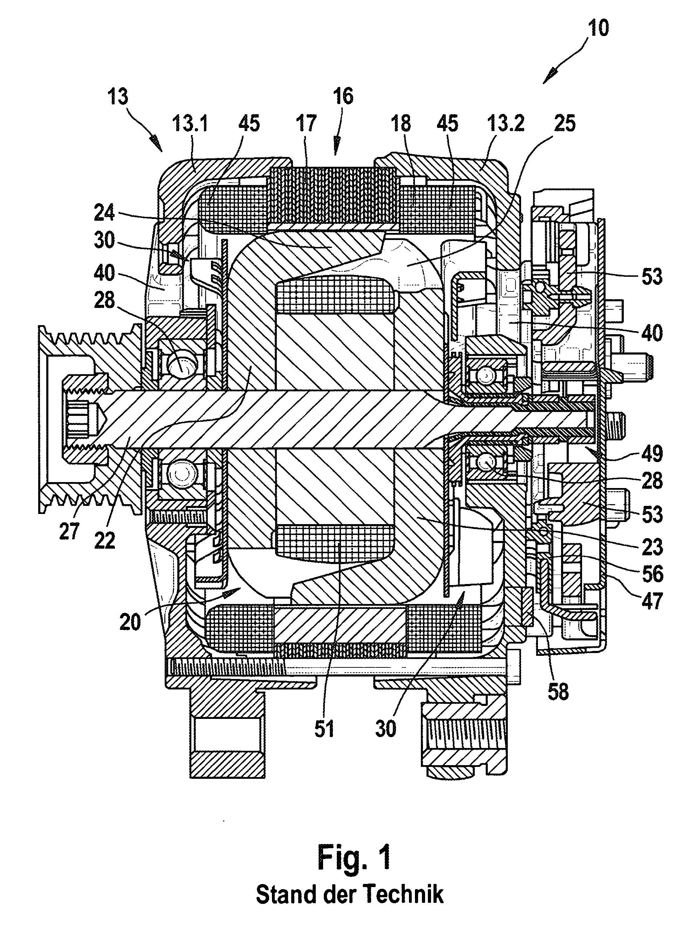

Die Figur 1 zeigt den aktuelle Stand der Technik.

In Figur 1 ist ein Querschnitt durch eine elektrische Maschine 10, hier in der Ausführung als Generator beziehungsweise Drehstromgenerator für Kraftfahrzeuge, dargestellt. Diese elektrische Maschine 10 weist unter anderem ein zweiteiliges Gehäuse 13 auf, das aus einem ersten Lagerschild 13.1 und einem zweiten Lagerschild 13.2 besteht. Das Lagerschild 13.1 und das Lagerschild 13.2 nehmen in sich einen so genannten Stator 16 auf, der einerseits aus einem im Wesentlichen kreisringförmigen Ständereisen 17 besteht, und in dessen nach radial innen gerichtete, sich axial erstreckende Nuten eine Ständerwicklung 18 eingelegt ist. Dieser ringförmige Stator 16 umgibt mit seiner radial nach innen gerichteten genuteten Oberfläche einen Rotor 20, der als Klauenpolläufer ausgebildet ist. Der Rotor 20 besteht unter anderem aus zwei Klauenpolplatinen 22 und 23, an deren Außenumfang jeweils sich in axialer Richtung erstreckende Klauenpolfinger 24 und 25 angeordnet sind. Beide Klauenpolplatinen 22 und 23 sind im Rotor 20 derart angeordnet, dass deren sich in axialer Richtung erstreckende Klauenpolfinger 24 beziehungsweise 25 am Umfang des Rotors 20 einander abwechsein. Es ergeben sich dadurch magnetisch erforderliche Zwischenräume zwischen den gegensinnig magnetisierten Klauenpolfingern 24 und 25, die als Klauenpolzwischenräume bezeichnet werden. Der Rotor 20 ist mittels einer Weile 27 und je einem auf je einer Rotorseite befindlichen Wälzlager 28 in den jeweiligen Lagerschilden 13.1 beziehungsweise 13.2 drehbar gelagert.

Der Rotor 20 weist insgesamt zwei axiale Stirnflächen auf, an denen jeweils ein Lüften 30 befestigt ist. Dieser Lüfter 30 besteht im Wesentlichen aus einem plattenförmigen beziehungsweise scheibenförmigen Abschnitt, von dem Lüfterschaufeln in bekannter Weise ausgehen. Diese Lüfter 30 dienen dazu, über Öffnungen 40 in den Lagerschilden 13.1 und 13.2 einen Luftaustausch zwischen der Außenseite der elektrischen Maschine 10 und dem Innenraum der elektrischen Maschine 10 zu ermöglichen. Dazu sind die Öffnungen 40 im Wesentlichen an den axialen Enden der Lagerschilde 13.1 und 13.2 vorgesehen. über die mittels der Lüfter 30 Kühlluft in den Innenraum der elektrischen Maschine 10 eingesaugt wird. Diese Kühlluft wird durch die Rotation der Lüfter 30 nach radial außen beschleunigt, so dass diese durch den kühlluftdurchlässigen Wicklungsüberhang 45 hindurchtreten dann. Durch diesen Effekt wird der Wicklungsüberhang 45 gekühlt. Die Kühlluft nimmt nach dem Hindurchtreten durch den Wicklungsüberhang 45 beziehungsweise nach dem Umströmen dieses Wicklungsüberhangs 45 einen Weg nach radial außen, durch hier in dieser Figur 1 nicht dargestellte Öffnungen.

In Figur 1 auf der rechten Seite befindet sich eine Schutzkappe 47, die verschiedene Bauteile vor Umgebungseinflüssen schützt. So sägt diese Schutzkappe 47 beispielsweise eine sogenannte Schleifringbaugruppe 49 ab, die dazu dient, eine Erregerwicklung 51 mit Erregerstrom zu versorgen. Um diese Schleifringbaugruppe 49 herum ist ein Kühlkörper 53 angeordnet, der hier als Pluskühlkörper wirkt. Als so genannter Minuskühlkörper wirkt das Lagerschild 13.2. Zwischen dem Lagerschild 13.2 und dem Kühlkörper 53 ist eine Anschlussplatte 56 angeordnet, die dazu dient, im Lagerschild 13.2 angeordnete Minusdioden 58 und hier in dieser Darstellung nicht gezeigte Plusdioden im Kühlkörper 53 miteinander zu verbinden und somit eine an sich bekannte Bröckelschaltung darzustellen.

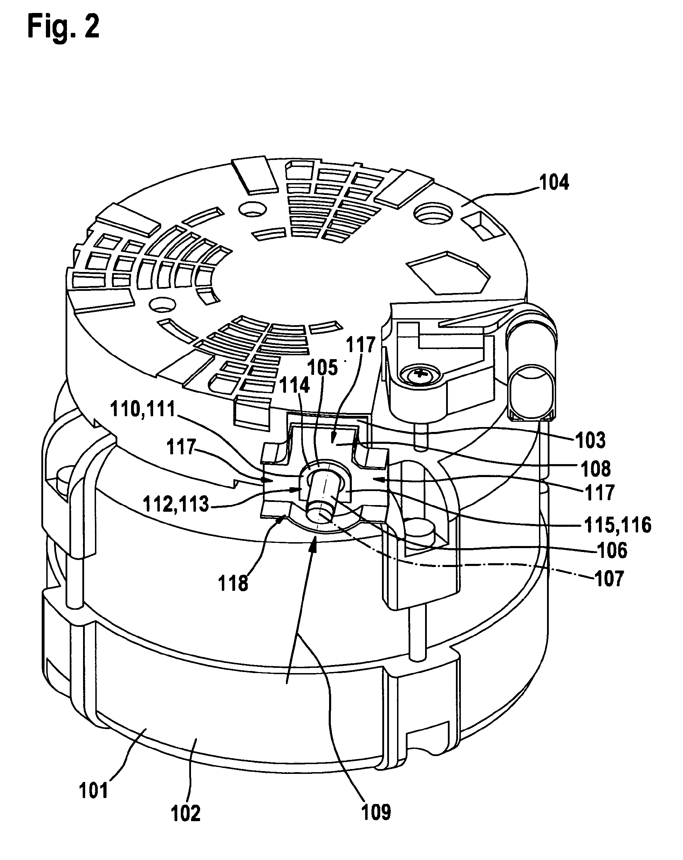

Die Figur 2 zeigt eine weitere elektrische Maschine 101, welche als Generator 102 eines nicht dargestellten Kraftfahrzeugs ausgebildet ist. Die elektrische Maschine 101 basiert auf dem gleichen Funktionsprinzip wie die elektrische Maschine 10 der Figur 1. Die elektrische Maschine 101 weist einen Kühlkörper 103 auf, welcher von einer Schutzkappe 104 abgedeckt ist. Der Kühlkörper 103 besitzt einen Steckzapfen 105 und in dem Steckzapfen 105 ist ein Stromanschlussbolzen 106 befestigt. Der Anschlussbolzen 106 weist zu diesem Zweck ein nicht dargestelltes Außengewinde auf, welches mit einem ebenfalls nicht dargestellten Innengewinde des Steckzapfens 105 kämmt und den Stromanschlussbolzen 106 in dem Steckzapfen 105 festlegt. Ferner dient der Bereich des Außengewindes, welcher nicht innerhalb des Steckzapfens 105 angeordnet ist, der Aufnahme einer Befestigungsmutter, welche ebenfalls nicht dargestellt ist. Der Stromanschlussbolzen 106 besitzt zudem eine Längsachse 107. Auf den Steckzapfen 105 ist eine Verdrehsicherung 108 in einer Steckrichtung, weiche durch einen Pfeil 109 dargestellt ist, aufgesteckt. Die Verdrehsicherung 108 weist eine Stecköffnung 110 auf, welche als Durchbruch 111 ausgebildet ist. Auch eine Ausgestaltung der Stecköffnung 110 als Vertiefung ist denkbar. Die Stecköffnung 110 besitzt einen nicht kreisförmigen Querschnitt 112, weicher als kombinierter teilweise kreisförmiger und teilweise rechteckiger Querschnitt 113 ausgeführt ist. Der Querschnitt 113 bildet eine Querschnittskontur 114, die die gesamte Stecköffnung 110 umgibt. Der Steckzapfen 105 besitzt ebenfalls einen nicht kreisförmigen Querschnitt 115, welcher als an die Querschnittskontur 114 angepasster kombinierter teilweise rechteckiger und teilweise kreisförmiger Querschnitt 116 ausgeführt ist. Die Verdrehsicherung 108 weist drei Aufnahmetaschen 117 auf, welche in 90° Winkeln zueinander winkelversetzt sind. Die Stecköffnung 110 und der Steckzapfen 105 bilden zusammen eine Steckverbindung 118.

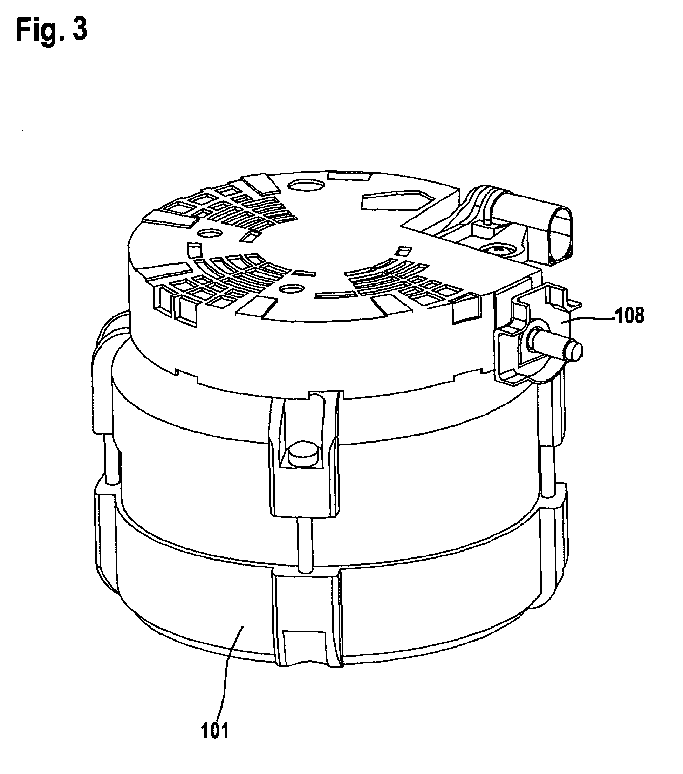

Die Figur 3 zeigt die elektrische Maschine 101 der Figur 2 mit all ihren Merkmalen in einer perspektivischen Ansicht. Die Verdrehsicherung 108 ist ebenfalls in einer perspektivischen Darstellung gezeigt.

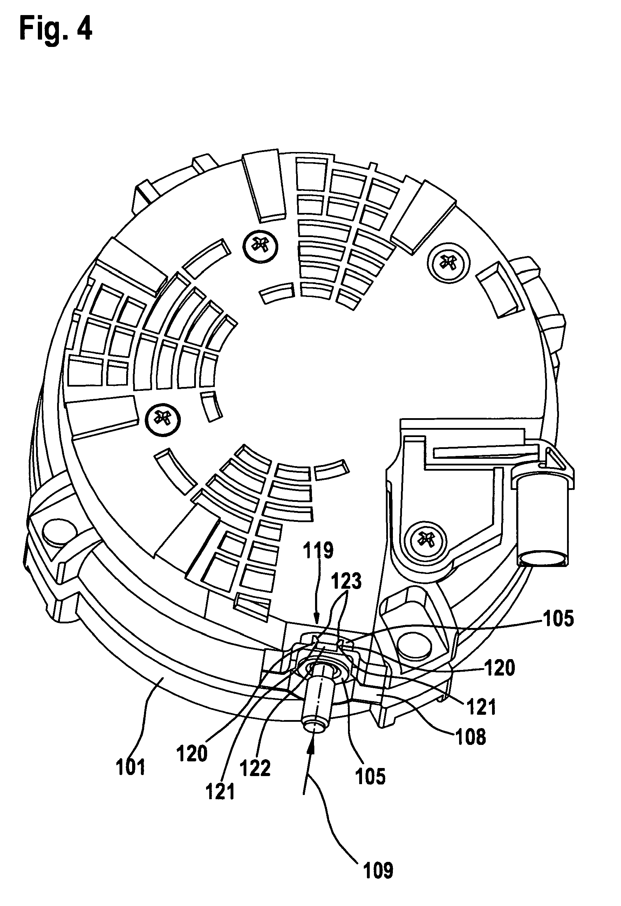

Die Figur 4 zeigt die elektrische Maschine 101 der Figur 2 in einer Draufsicht. Die elektrische Maschine 101 weist sämtliche Merkmale auf, die in Figur 2 beschrieben sind. Die Verdrehsicherung 108 ist ebenfalls in einer Draufsicht gezeigt. Es ist erkennbar, dass die Verdrehsicherung 108 mittels einer lösbaren Axialsicherung 119 an dem Steckzapfen 105 befestigt ist. Die lösbare Axialsicherung 119 besteht aus zwei Schnapphaken 120, welche jeweils eine Hintergriffsstufe 121 aufweisen. Die Hintergriffsstufen 121 wirken entgegen der Steckrichtung 109 mit einem axialen Sicherungszapfen 122 zusammen. Die Schnapphaken 120 weisen quer zur Steckrichtung 109 verlaufende Gleitverlagerungsschrägen 123 auf. Die Gleitverlagerungsschrägen 123 ermöglichen ein einfaches Aufstecken der Verdrehsicherung 108 auf den Steckzapfen 105, indem sie die Schnapphaken 120 beim Aufstecken an den Axialsicherungszapfen 122 vorbeiführen, sodass sich die Hintergriffsstufen 121 in Steckrichtung 109 gesehen hinter den Axialsicherungszapfen 122 positionieren können, um somit einen Abzug der Verdrehsicherung 108 von dem Steckzapfen 105 zu verhindern.

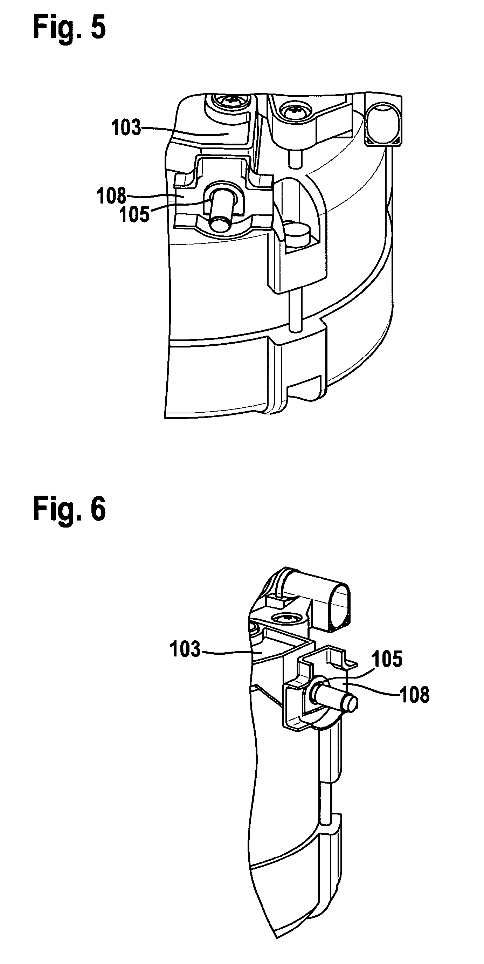

Die Figur 5 zeigt einen Ausschnitt der Figur 2 ohne die Schutzkappe 104.

Die Figur 6 zeigt einen Ausschnitt der Figur 3 ohne die Schutzkappe 104.

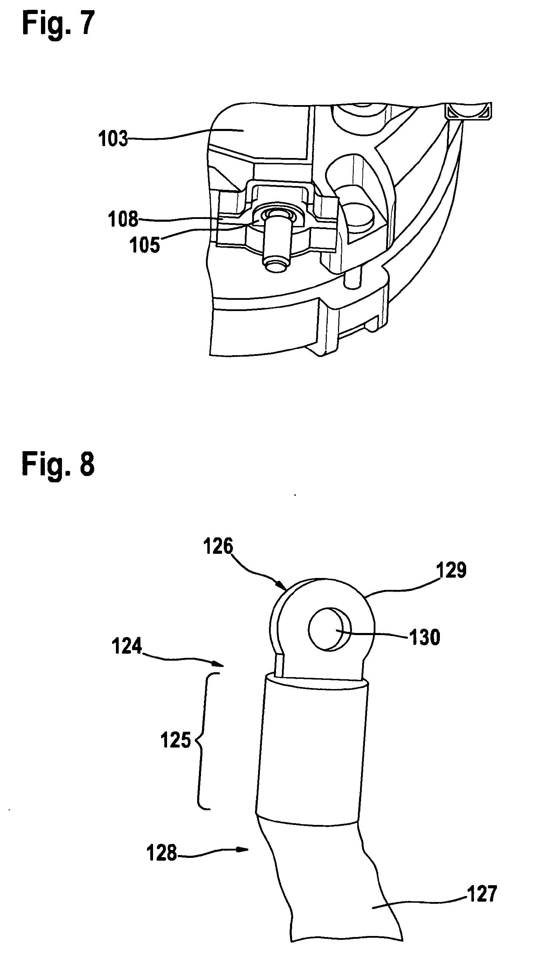

Die Figur 7 zeigt einen Ausschnitt der Figur 4 ohne die Schutzkappe 104.

Die Figuren 5 bis 7 verdeutlichen, dass die Verdrehsicherung am Kühlkörper 103 über den Steckzapfen 105 befestigt ist. Somit besteht die Möglichkeit, die Schutzkappe 104 zu entfernen, ohne dass die Verdrehsicherung 108 davon betroffen ist.

Die Figur 8 zeigt einen Kabelschuh 124, welcher einem Batteriekabel 128 angehört. Der Kabelschuh 124 weist einen Kabelanschlussbereich 125 und eine Anschlussöse 126 auf. Der Kabelanschlussbereich 125 verbindet die Anschlussöse 126 mit einem Stromkabel 127. Die Anschlussöse 126 weist eine bereichsweise runde Außenkontur 129 sowie eine zentrisch in der Anschlussöse 126 angeordnete Bohrung 130 auf.

Die erfindungsgemäße Steckverbindung 118 ermöglicht, die Verdrehsicherung 108 während eines Herstellungsprozesses auf den Steckzapfen 105 aufzustecken. Mittels der Axialsicherung 119 wird die Verdrehsicherung 108 während des gesamten Herstellungsprozesses und auch während eines anschließenden Transports und Einbaus an einem Einsatzort sicher gehalten. Aufgrund der Ausgestaltung der lösbaren Axialsicherung 119 ergibt sich die axiale Sicherung automatisch beim Aufstecken der Verdrehsicherung 108 auf den Steckzapfen 105. Bei Einsatz der elektrischen Maschine 110 an ihrem Einsatzort kann das Batteriekabel 128 drehfest mit der elektrischen Maschine 110 verbunden werden. Zu diesem Zweck wird das Batteriekabel 128, welches in Figur 8 dargestellt ist, mit dem Stromanschlussbolzen 6 elektrisch verbunden. Der Stromanschlussbolzen 106 wird zu diesem Zweck in die Bohrung 130 des Batteriekabels 128 gesteckt und mit der nicht dargestellten Befestigungsmutter gesichert. Um eine Verdrehung des Bateriekabels 128 zu verhindern, wird der Kabelschuh 124 im Bereich des Kabelanschlussbereichs 125 in eine der Aufnahmetaschen 117 angeordnet. Anschließend wird die Befestigungsmutter festgelegt, sodass der Kabelanschlussbereich 125 innerhalb der Aufnahmetasche 117 verbleibt und von dieser gehindert wird, sich um die Längsachse 109 herum zu verdrehen. Je nach Einbaulage der elektrischen Maschine 101 und nach gewünschtem Verlauf des Batteriekabels 128 kann eine der Aufnahmetaschen 117 ausgewählt werden, in die der Kabelanschlussbereich 125 zur Verhinderung der Verdrehung eingelegt wird. Die Verdrehsicherung 108 wird aufgrund des nicht kreisförmigen Querschnitts 112 in Verbindung mit dem nicht kreisförmigen Querschnitt 115 des Steckzapfens 105 an einer Verdrehung um die Längsachse 109 gehindert. Die Ausgestaltung der Querschnitte 112 und 115 kann zu diesem Zweck in verschiedener Weise erfolgen, insbesondere rechteckig, vieleckig oder auch mit Vorsprüngen versehen, die die Verdrehung der Verdrehsicherung 108 gegenüber dem Steckzapfen 105 verhindern.

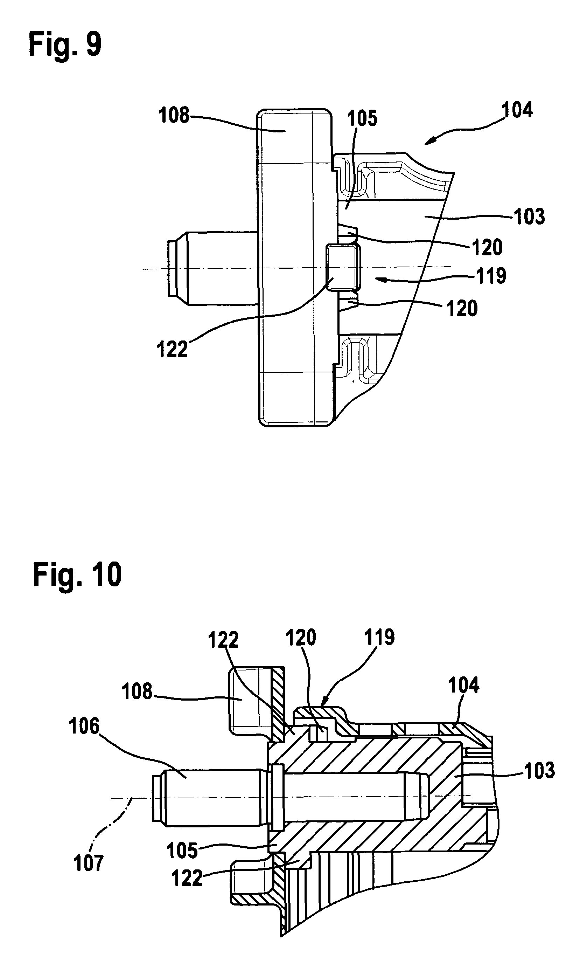

Die Figur 9 zeigt eine Ansicht von unten auf die Verdrehsicherung 108, welche an dem Kühlkörper 103 mittels der lösbaren Axialsicherung 119 festgelegt ist, mit der Schutzkappe 104. Es ist erkennbar, dass die Schutzkappe 104 den Kühlkörper 103 weitgehend abdeckt, jedoch nicht mit der Verdrehsicherung 108 verbunden ist. Ferner ist gezeigt, dass die lösbare Axialsicherung 119 in unterschiedlichen Ausführungsformen vorliegen kann. Die dargestellte Ausführungsform der Axialsicherung 119 ermöglicht aufgrund der Breite der Schnapphaken 120 eine besonders gute zusätzliche Verhinderung der Verdrehung der Verdrehsicherung 108 gegenüber dem Steckzapfen 105.

Die Figur 10 zeigt einen Längsschnitt entlang der Längsachse 107 durch die Verdrehsicherung 108, den Kühlkörper 103 und die Schutzkappe 104. Ferner ist die Axialsicherung 119 im Bereich seiner Axialsicherungszapfen 122 geschnitten. Erkennbar ist, dass in der dargestellten Ausführungsform lediglich im oberen Bereich Schnapphaken 120 angeordnet sind. Ferner ist erkennbar, dass der Stromanschlussbolzen 106 in den Kühlkörper 103 bereichsweise eingeschraubt ist.

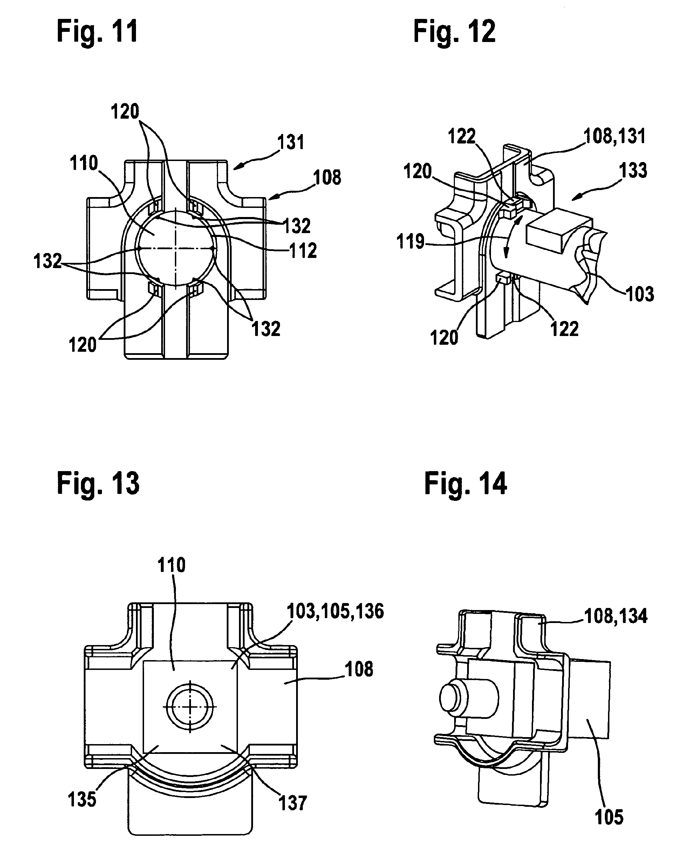

Die Figur 11 zeigt eine weitere Ausführungsform 131 der Verdrehsicherung 108 in einer Rückansicht. Die Ausführungsform 131 weist sowohl oberhalb als auch unterhalb der Stecköffnung 110 jeweils zwei Schnapphaken 120 auf. Zudem ist die Stecköffnung 110 in seiner Grundform kreisförmig ausgestaltet und besitzt in Umfangsrichtung verteilt eine Mehrzahl an Rastnasen 132. Die Rastnasen 132 führen dazu, dass die Stecköffnung 110 einen nicht kreisförmigen Querschnitt 112 besitzt, der ein Verdrehen der Verdrehsicherung 108 gegenüber dem Steckzapfen 105 verhindert.

Die Figur 12 zeigt die Ausführungsform 131 der Verdrehsicherung 108 an dem Kühlkörper 103 installiert in einer perspektivischen Ansicht, wobei der Kühlkörper 103 als zur Ausführungsform 131 der Verdrehsicherung 108 zugehörigen Ausführungsform 133 des Kühlkörpers 103 vorliegt. Die Ausführungsform 133 des Kühlkörper 103 weist einen Querschnitt auf, welcher Rastsitze besitzt, welche den Rastnasen 132 zugeordnet sind. Die Rastsitze sind in Figur 12 nicht dargestellt. Ferner ist erkennbar, dass jeweils zwei Schnapphaken 120 mit einem Axialsicherungszapfen 122 wirkverbunden sind. Somit ergibt sich eine lösbare Axialsicherung 119 an zwei Stellen der Verdrehsicherung 108, wodurch eine besonders sichere axiale Sicherung der Verdrehsicherung 108 herbeigeführt wird.

Die Figur 13 zeigt eine dritte Ausführungsform 134 der Verdrehsicherung 108. Die Verdrehsicherung 108 weist eine Stecköffnung 110 auf, welche einen quadratischen Querschnitt 135 besitzt. In den quadratischen Querschnitt 135 ist eine dritte Ausführungsform 136 des Steckzapfens 105 des Kühlkörpers 103 eingesteckt. Der Steckzapfen 105 der dritten Ausführungsform 136 weist einen an den quadratischen Querschnitt 135 der Stecköffnung 110 angepassten ebenfalls quadratischen Querschnitt 137 auf.

Die Figur 14 zeigt die dritte Ausführungsform 134 der Verdrehsicherung 108 in einer perspektivischen Ansicht. Es ist erkennbar, dass sich der Steckzapfen 105 durch die Verdrehsicherung 108 hindurch erstreckt.

Die Verwendung von Axialsicherungszapfen 122 führt zudem zu einer Begrenzung in Steckrichtung, sodass die Verdrehsicherung 108 nur bis zu den Axialsicherungszapfen 122 aufgesteckt werden kann. Somit wird eine Lage der Verdrehsicherung 108 entlang der Längsachse 107 bestimmt.

## Patentansprüche

1. Elektrische Maschine (10, 101), insbesondere Generator (102), für ein Kraftfahrzeug, mit einem Kühlkörper (53, 103) und einem Stromanschlussbolzen (106), auf den eine Anschlussöse (126) eines Stromkabels (127) aufschiebbar ist, und mit einer Verdrehsicherung (108) zur Verhinderung einer Verdrehung der Anschlussöse (126) um die Längsachse (107) des Stromanschlussbolzens (106), **dadurch gekennzeichnet, dass** die Verdrehsicherung (108) eine lösbare, um die Längsachse (107) des Stromanschlussbolzens (106) drehfeste Steckverbindung (118) mit dem Kühlkörper (103) aufweist.

2. Elektrische Maschine (10, 101) nach Anspruch 1, **dadurch gekennzeichnet, dass** die Steckverbindung (118) aus mindestens einer Stecköffnung (110) und mindestens einem Steckzapfen (105) besteht, die in einer, vorzugsweise in Richtung der Längsachse (107) des Stromanschlussbolzens (106) verlaufenden Steckrichtung ineinandersteckbar sind.

3. Elektrische Maschine (10, 101) nach einem der vorhergehenden Ansprüche, **dadurch gekennzeichnet, dass** der Kühlkörper (103) den Steckzapfen (105) und die Verdrehsicherung (108) die Stecköffnung (110) aufweist.

4. Elektrische Maschine (10, 101) nach einem der vorhergehenden Ansprüche, **dadurch gekennzeichnet, dass** die Stecköffnung (110) als Vertiefung oder als Durchbruch (111) ausgebildet ist.

5. Elektrische Maschine (10, 101) nach einem der vorhergehenden Ansprüche, **dadurch gekennzeichnet, dass** die Stecköffnung (110) einen nicht kreisförmigen Querschnitt (115), insbesondere rechteckigen und/oder halbkreisförmigen Querschnitt (113) besitzt.

6. Elektrische Maschine (10, 101) nach einem der vorhergehenden Ansprüche, **dadurch gekennzeichnet, dass** der Steckzapfen (105) einen an die Querschnittskontur (114) der Stecköffnung (110) angepassten, nicht kreisförmigen, insbesondere rechteckigen und/oder halbkreisförmigen Querschnitt (115, 116) besitzt.

7. Elektrische Maschine (10, 101) nach einem der vorhergehenden Ansprüche, **dadurch gekennzeichnet, dass** der Stromanschlussbolzen (106) an dem Kühlkörper (103) und/oder an dem Steckzapfen (105) angeordnet ist.

8. Elektrische Maschine (10, 101) nach einem der vorhergehenden Ansprüche, dadurch gekennzeichet, dass die Verdrehsicherung (108) an dem Kühlkörper (103) mittels einer lösbaren Axialsicherung (119) gehalten ist.

9. Elektrische Maschine (10, 101) nach einem der vorhergehenden Anspruch, **dadurch gekennzeichnet, dass** die Axialsicherung (119) mindestens einen am Kühlkörper (103) angeordneten, sich quer zur Längsachse (107) erstreckenden Axialsicherungszapfen (122) und mindestens einen an der Verdrehsicherung (108) angeordneten, eine, vorzugsweise entgegen der Steckrichtung mit dem Axialsicherungszapfen (122) zusammenwirkende Hintergriffstufe (121) aufweisenden Schnapphaken (120) aufweist.

10. Elektrische Maschine (10, 101) nach einem der vorhergehenden Ansprüche, **dadurch gekennzeichnet, dass** die Verdrehsicherung (108) mindestens eine, vorzugsweise mehrere zueinander winkelversetzte Aufnahmetaschen (117) für die Anschlussöse (126) aufweist.

11. Elektrische Maschine (10, 101) nach einem der vorhergehenden Ansprüche, **dadurch gekennzeichnet, dass** die Anschlussöse (126) einem Kabelschuh (124) angehört.

12. Elektrische Maschine (10, 101) nach einem der vorhergehenden Ansprüche, **dadurch gekennzeichnet, dass** der Kabelschuh (124) einen Kabelanschlussbereich (125) aufweist, der innerhalb der Aufnahmetasche (117) liegend die Verdrehung verhindert.

## Claims

1. Electrical machine (10, 101), in particular generator (102), for a motor vehicle, having a heat sink (53, 103) and a power connection stud (106) onto which a connection eye (126) of a power cable (127) can be pushed, and having a rotation-prevention means (108) for preventing rotation of the connection eye (126) about the longitudinal axis (107) of the power connection stud (106), **characterized in that** the rotation-prevention means (108) has a detachable plug connection (118) to the heat sink (103), which plug connection is fixed in terms of rotation about the longitudinal axis (107) of the power connection stud (106).

2. Electrical machine (10, 101) according to Claim 1, **characterized in that** the plug connection (118) comprises at least one plug opening (110) and at least one plug pin (105) which can be inserted one into the other in a plugging direction which preferably runs in the direction of the longitudinal axis (107) of the power connection stud (106).

3. Electrical machine (10, 101) according to either of the preceding claims, **characterized in that** the heat sink (103) has the plug pin (105), and the rotation-prevention means (108) has the plug opening (110).

4. Electrical machine (10, 101) according to one of the preceding claims, **characterized in that** the plug opening (110) is in the form of a recess or an aperture (111).

5. Electrical machine (10, 101) according to one of the preceding claims, **characterized in that** the plug opening (110) has a non-circular cross section (115), in particular a rectangular and/or semicircular cross section (113).

6. Electrical machine (10, 101) according to one of the preceding claims, **characterized in that** the plug pin (105) has a non-circular, in particular rectangular and/or semicircular, cross section (115, 116) which is matched to the cross-sectional contour (114) of the plug opening (110).

7. Electrical machine (10, 101) according to one of the preceding claims, **characterized in that** the power connection stud (106) is arranged on the heat sink (103) and/or on the plug pin (105).

8. Electrical machine (10, 101) according to one of the preceding claims, **characterized in that** the rotation-prevention means (108) is held on the heat sink (103) by means of a detachable axial securing means (119).

9. Electrical machine (10, 101) according to one of the preceding claims, **characterized in that** the axial securing means (119) has at least one axial securing pin (122), which is arranged on the heat sink (103) and extends transverse to the longitudinal axis (107), and at least one snap-action hook (120) which is arranged on the rotation-prevention means (108) and has a rear-engagement step (121) which interacts with the axial securing pin (122), preferably against the plugging direction.

10. Electrical machine (10, 101) according to one of the preceding claims, **characterized in that** the rotation-prevention means (108) has at least one receiving pocket (117), preferably a plurality of receiving pockets which are offset at an angle to one another, for the connection eye (126).

11. Electrical machine (10, 101) according to one of the preceding claims, **characterized in that** the connection eye (126) forms part of a cable shoe (124).

12. Electrical machine (10, 101) according to one of the preceding claims, **characterized in that** the cable shoe (124) has a cable connection region (125) which prevents the rotation by virtue of being situated within the receiving pocket (117).

## Revendications

1. Machine électrique (10, 101), en particulier générateur (102), pour véhicule automobile, dotée
d'un corps de refroidissement (53, 103) et d'une borne (106) de raccordement au courant sur laquelle un oeillet de raccordement (126) d'un câble de courant (127) peut être passé et
d'un blocage antirotation (108) qui empêche la rotation de l'oeillet de raccordement (126) autour de l'axe longitudinal (107) de la borne (106) de raccordement de courant,
**caractérisée en ce que**
le blocage antirotation (108) présente une liaison enfichable (118) avec le corps de refroidissement (103), libérable et fixée de manière à ne pas pouvoir tourner autour de l'axe longitudinal (107) de la borne (106) de raccordement de courant.

2. Machine électrique (10, 101) selon la revendication 1, **caractérisée en ce que** la liaison enfichable (118) est constituée d'au moins une ouverture d'enfichage (110) et d'au moins un tourillon d'enfichage (105) qui peuvent être enfichés l'un dans l'autre dans une direction d'enfichage qui s'étend de préférence dans la direction de l'axe longitudinal (107) de la borne (106) de raccordement de courant.

3. Machine électrique (10, 101) selon l'une des revendications précédentes, **caractérisée en ce que** le corps de refroidissement (103) présente le tourillon d'enfichage (105) et le blocage antirotation (108) de l'ouverture d'enfichage (110).

4. Machine électrique (10, 101) selon l'une des revendications précédentes, **caractérisée en ce que** l'ouverture d'enfichage (110) est configurée comme creux ou comme perforation (111).

5. Machine électrique (10, 101) selon l'une des revendications précédentes, **caractérisée en ce que** l'ouverture d'enfichage (110) a une section transversale (115) non circulaire et en particulier une section transversale (113) rectangulaire et/ou en demi-cercle.

6. Machine électrique (10, 101) selon l'une des revendications précédentes, **caractérisée en ce que** le tourillon d'enfichage (105) a une section transversale (115, 116) non circulaire, en particulier rectangulaire et/ou semi-circulaire, adaptée au contour (114) de la section transversale de l'ouverture d'enfichage (110).

7. Machine électrique (10, 101) selon l'une des revendications précédentes, **caractérisée en ce que** la borne (106) de raccordement de courant est disposée sur le corps de refroidissement (103) et/ou sur le tourillon d'enfichage (105).

8. Machine électrique (10, 101) selon l'une des revendications précédentes, **caractérisée en ce que** le blocage antirotation (108) est maintenu sur le corps de refroidissement (103) au moyen d'un blocage axial (119) libérable.

9. Machine électrique (10, 101) selon l'une des revendications précédentes, **caractérisée en ce que** le blocage axial (119) présente au moins un tourillon (122) de blocage axial disposé sur le corps de refroidissement (103) et s'étendant transversalement par rapport à l'axe longitudinal (107) et au moins un crochet d'encliquetage (120) disposé sur le blocage antirotation (108) et présentant un gradin (121) d'accrochage par l'arrière qui coopère avec le tourillon (122) de blocage axial, de préférence dans la direction opposée à la direction d'enfichage.

10. Machine électrique (10, 101) selon l'une des revendications précédentes, **caractérisée en ce que** le blocage antirotation (108) présente au moins une poche (117) de réception de l'oeillet de raccordement (126) et de préférence plusieurs poches de réception décalées angulairement les unes par rapport aux autres.

11. Machine électrique (10, 101) selon l'une des revendications précédentes, **caractérisée en ce que** l'oeillet de raccordement (126) fait partie d'un soulier de câble (124).

12. Machine électrique (10, 101) selon l'une des revendications précédentes, **caractérisée en ce que** le soulier de câble (124) présente une partie (125) de raccordement de câble qui empêche la rotation lorsqu'elle est située à l'intérieur de la poche de réception (117).
